# EUROPEAN PATENT SPECIFICATION

(11) **EP 3 690 153 B1**
(45) Date of publication and mention of the grant of the patent: **18.08.2021**
(21) Application number: 20155491.2
(22) Date of filing: 04.02.2020
(51) Int. Cl.: E03C 1/04

(54) **DISPENSING DEVICE AND METHOD FOR ASSEMBLYING A DISPENSING DEVICE**
ABGABEVORRICHTUNG UND VERFAHREN ZUR MONTAGE EINER ABGABEVORRICHTUNG
DISPOSITIF DE DISTRIBUTION ET PROCÉDÉ D'ASSEMBLAGE D'UN DISPOSITIF DE DISTRIBUTION

(30) Priority: 04.02.2019 IT 201900001589
(43) Date of publication of application: 05.08.2020
(73) Proprietor: Vizio GmbH, 78554 Aldingen (DE)
(72) Inventor: LA SPINA, Giacomo, 13030 GHISLARENGO (VC) (IT)
(74) Representative: Seeger, Heiko

(56) References cited:
- EP-A1- 1 491 805
- IT-A1- BS20 070 185
- US-A- 5 027 851

## Description

### CROSS-REFERENCE TO RELATED APPLICATIONS

This patent application claims priority from Italian patent application no. 102019000001589 filed on February 4, 2019.

### TECHNICAL FIELD

The present invention relates to a device for dispensing a liquid.

Advantageously, the present invention also relates to a method for assembling a dispensing device for a liquid.

### BACKGROUND ART

There are known devices of the above-mentioned type that are configured to dispense, in a controlled way, a liquid such as cold water, hot water, mixed water (obtained by mixing cold and hot water), or treated water (e.g. filtered water).

Dispensing devices, such as the one disclosed in EP-A-1491805, comprise a main body that can be mounted on a worktop at a sink or washbasin or the like.

A typical main body comprises at least:
- a first and second inlet conduit configured to receive a first liquid and a second liquid respectively, e.g. cold water and hot water; and
- an outlet conduit configured to allow the discharge of a liquid that corresponds to the first liquid or to the second liquid, or to a liquid obtained by mixing the first and the second liquid.

The dispensing device also comprises a mixing cartridge inserted in a housing seat of the main body and configured to selectively control the fluidic connection of the first and second inlet conduit with the outlet conduit and, therefore, to control the discharge of the liquid and the ratio between the first liquid and the second liquid that forms the above-mentioned liquid. The mixing cartridge is, in addition, configured to control the liquid flow rate.

The dispensing device also comprises a spout mounted on the main body and having an outlet passage in fluidic connection with the outlet conduit to allow the controlled discharge of the liquid from the spout and, consequently, from the dispensing device.

It is well known in the industry that the main body and the spout must meet customers' aesthetic requirements (e.g. colour or external structure). For this reason, different models of the same dispensing device are provided that differ from each other in aesthetic details, for example in the colour or external structure. Consequently, it is necessary to produce a significant number of parts for each model of
the dispensing device in order to promptly respond to market demands.

This means that a producer must, before knowing the real demand, produce and stock a significant number of parts of each model.

However, the demand for a model may be greater or less than the number of parts available for each model. In the first case, the producer and/or seller loses a sales opportunity or can only supply the dispensing device with a delay. In the second case, the producer and/or seller is in the situation of having incurred costs for the production and storage of the unsold parts and of having to incur costs for their disposal.

ITBS-A-20070185 and US-A-5027851 propose putative solutions to these problems.

US-A-5027851 discloses a dispensing device having a main body and a decorative cover, which coaxially receives the valve body. Thereby, the cover is easily removable from the main body.

ITBS-A-20070185 discloses a dispensing device having a main body and a decorative sleeve, which fully covers the main body. In more detail, the decorative sleeve and the main body are coaxially arranged with respect to one another.

### DISCLOSURE OF INVENTION

The purpose of the present invention is to provide a dispensing device that is free of the drawbacks described above and that is, at the same time, easy and inexpensive to produce.

In accordance with the present invention, a dispensing device and a method for assembling the dispensing device are provided, according to what is claimed in the appended independent claims, and preferably, in any one of the claims depending directly or indirectly on the aforesaid independent claims.

Further preferred features of the present invention are included in the dependent claims.

### BRIEF DESCRIPTION OF THE DRAWINGS

The present invention will now be described with reference to the accompanying drawings, which illustrate a non-limiting embodiment thereof, wherein:
- Figure 1 shows in frontal perspective view a dispensing device made according to the present invention and installed on a worktop, with parts removed for clarity;
- Figure 2 shows, in an exploded frontal perspective view and on an enlarged scale, the dispensing device in Figure 1, with parts removed for clarity;
- Figure 3 shows, in perspective view from below and on an enlarged scale, the dispensing device in Figures 1 and 2, with parts removed for clarity;
- Figure 4a shows, in perspective view and on an enlarged scale, a detail of the dispensing device in Figures 1 and 2, with parts removed for clarity;
- Figure 4b shows, in perspective view, the detail of Figure 4a at a different angle, with parts removed for clarity; and
- Figure 5 is a perspective cross-section on an enlarged scale along the plane V-V in Figure 4a, with parts removed for clarity.

### BEST MODE FOR CARRYING OUT THE INVENTION

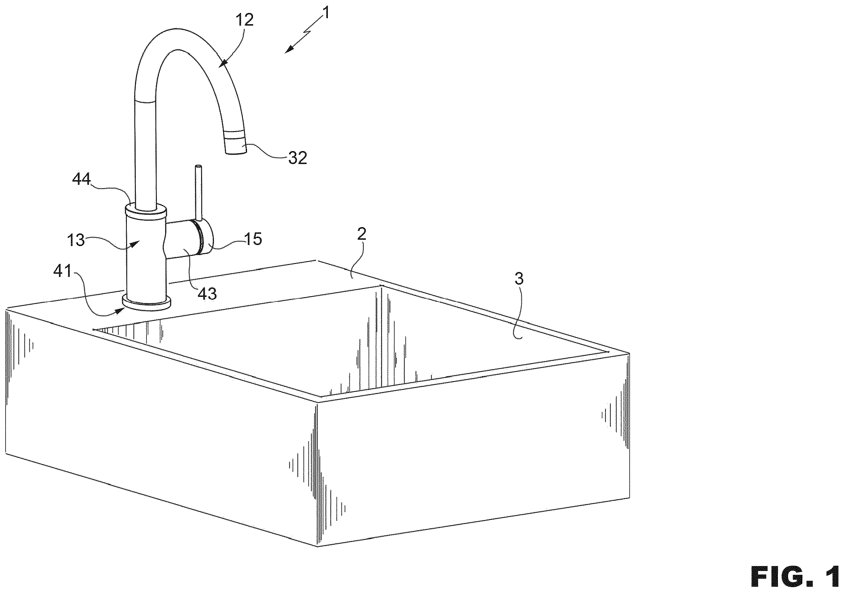

In Figure 1, the reference number 1 generically indicates, as a whole, a dispensing device for dispensing a liquid in a controlled manner.

According to a preferred, non-limiting embodiment, dispensing device 1 is designed to (is configured to) be mounted on a worktop 2, in particular at a sink 3, a washbasin, or the like.

According to a preferred, non-limiting embodiment, the liquid is either cold water or hot water or mixed water obtained or obtainable by mixing cold and hot water. Preferably but not necessarily, cold water and/or hot water come/s from an (external and/or centralised) supply system, e.g. a home or camper van or caravan system or the like.

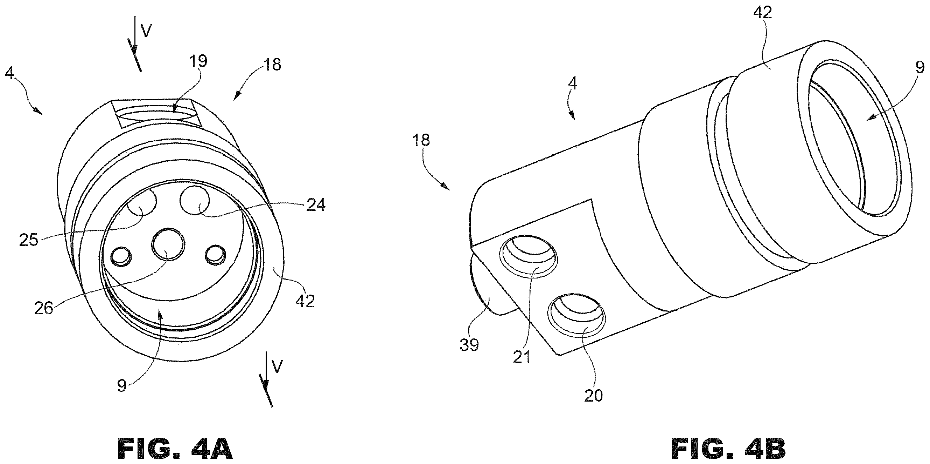

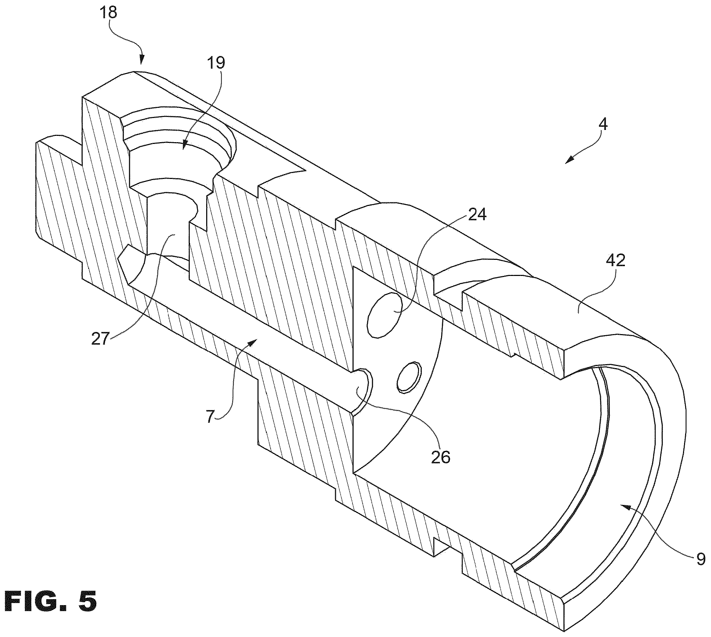

With particular reference to Figures 1 to 5, dispensing device 1 comprises at least one main body 4 having at least:
- a first inlet conduit to receive a first liquid;
- in particular, a second inlet conduit to receive a second liquid; and
- an outlet conduit 7 to allow the discharge of the liquid from the main body 4 itself.

In particular, the liquid is the first liquid or the second liquid or a mixture of the first and second liquid.

According to a non-limiting embodiment, the first liquid is cold water and the second liquid is hot water. Consequently, the liquid is either cold water or hot water or mixed water.

With particular reference to Figures 1 to 5, dispensing device 1 also comprises at least:
- a control body inserted, in particular a mixing cartridge 8 inserted, in a housing seat 9 of main body 4 and at least configured to selectively control a fluidic connection between the first inlet conduit and outlet conduit 7, preferably but not necessarily also between the second inlet conduit and outlet conduit 7;
- a first inlet tube 10 fixed (mechanically) to main body 4, fluidically connected to the first inlet conduit and configured to be connected to a feeding system to supply at least the first liquid;
- in particular, a second inlet tube 11 fixed to main body 4, fluidically connected to the second inlet conduit and configured to be connected to a feeding system to supply at least the second liquid; and
- a spout 12 having at least one outlet passage, which is or which is controllable to be in fluidic connection with the outlet conduit 7, and configured to allow the discharge of the liquid from spout 4 itself, and, in particular (consequently), from dispensing device 1.

Advantageously, dispensing device 1 also comprises a decorative sleeve 13 in which at least a portion of main body 4, a portion of inlet tube 10 and/or 11, and at least a portion of spout 12 are housed.

The dispensing device 1 also comprises a support structure 14, which is at least partially, preferably completely, surrounded and/or covered by decorative sleeve 13 and that is configured to support at least main body 4. In particular, support structure 14 is coupled and/or connected to decorative sleeve 13.

According to a preferred non-limiting embodiment, dispensing device 1 also comprises a knob 15 coupled to mixing cartridge 8 and configured to allow a user to control mixing cartridge 8.

With particular reference to Figures 1 to 5, main body 4 extends along a longitudinal axis A.

In more detail, main body 4 comprises a coupling portion 18 to which spout 12 is, or can be, coupled.

Preferably but not necessarily, coupling portion 18 comprises a housing seat 19 in which spout 12 is housed and/or can be housed.

According to a preferred non-limiting embodiment, main body 4, in particular coupling portion 18, comprises a receiving seat 20 for inlet tube 10 and, in particular, another receiving seat 21 for inlet tube 11. More precisely, inlet tube 10 is fixed to main body 4 in the receiving seat 20 and inlet tube 11 is fixed to main body 4 in receiving seat 21.

According to a preferred non-limiting embodiment, the first inlet conduit comprises a first inlet opening arranged at, in particular in, receiving seat 20.

According to a preferred non-limiting embodiment, the second inlet conduit comprises a second inlet opening arranged at, in particular in, receiving seat 21.

Preferably but not necessarily, dispensing device 1 comprises at least a first gasket joined to receiving seat 20 and inlet tube 10, configured to seal the fluidic connection between inlet tube 10 and the first inlet conduit so that the first liquid flows, in use, from inlet tube 10 into the first inlet conduit and so that uncontrolled discharges are prevented.

Preferably but not necessarily, dispensing device 1 also comprises a second gasket joined to receiving seat 21 and to inlet tube 11 so that the second liquid flows, in use, from inlet tube 11 into the second inlet conduit and so that uncontrolled discharges are prevented.

According to a preferred non-limiting embodiment, the first inlet conduit also comprises an outlet opening 24 arranged at, in particular in, housing seat 19, and, in particular, the second inlet conduit also comprises an outlet opening 25 arranged at, in particular in, housing seat 9.

According to a preferred non-limiting embodiment, outlet conduit 7 comprises an inlet opening 26 and an outlet opening 27 arranged, respectively, at, in particular in, one housing seat 9 and in another housing seat 19.

Preferably but not necessarily, main body 4 is made of metal (e.g. brass or stainless steel, etc.) or plastic.

According to a preferred non-limiting embodiment, main body 4 is obtained by means of milling and drilling.

Preferably but not necessarily, main body 4 is made of a single piece. Alternatively, main body 4 could be made from a plurality of pieces.

According to a preferred non-limiting embodiment, mixing cartridge 8 is configured to control the flow rate of liquid leaving spout 12, in particular by means of a respective manipulation of knob 15.

Preferably but not necessarily, mixing cartridge 8 is configured to control a mixing of the first and second liquid, in particular by means of a respective manipulation of knob 15. More precisely, by mixing the first and second liquid, it is possible to control, in use, the temperature of the liquid.

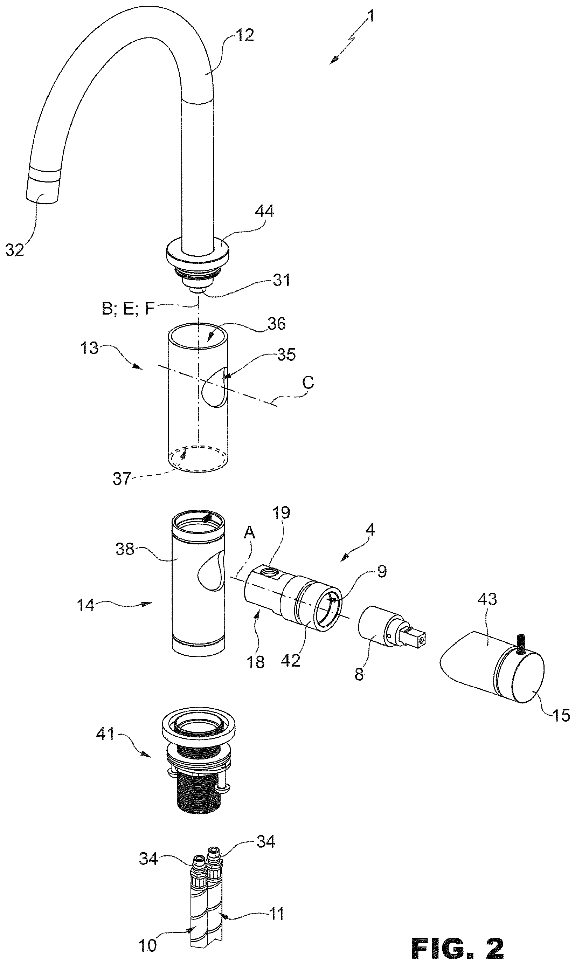

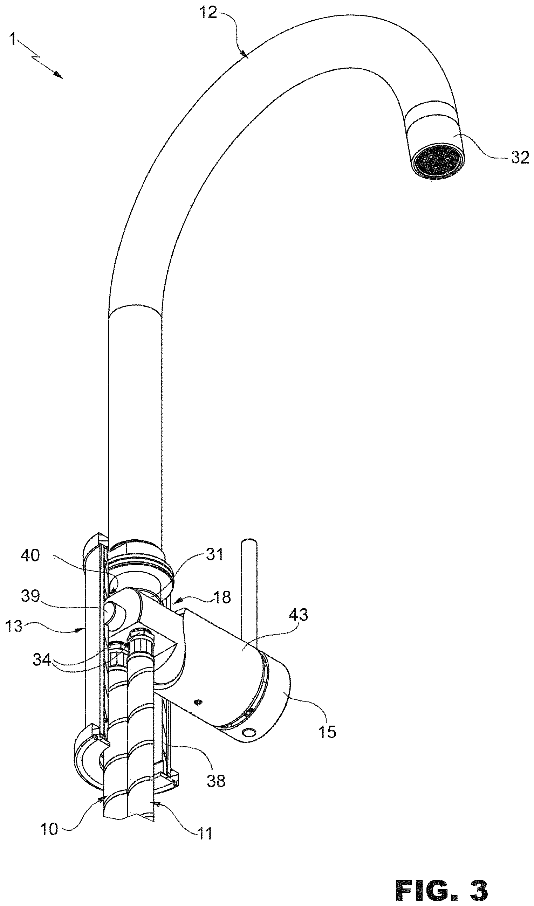

With particular reference to Figures 2 and 3, spout 12 is removably connected to main body 4.

According to a preferred non-limiting embodiment, spout 12 (is supported by main body 4 and) comprises a connection portion 31 that is mechanically connected to coupling portion 18. In particular, connection portion 31 is removably inserted and/or housed in housing seat 19.

According to a preferred non-limiting embodiment, connection portion 31 is arranged near, in particular at, a first end of spout 12.

According to a preferred non-limiting embodiment, spout 12 also comprises an outlet portion 32 from which the liquid is, in use, discharged.

Preferably but not necessarily, the outlet passage of spout 12 comprises an inlet hole (not shown) to allow the liquid to enter the outlet passage (and spout 12) and an outlet hole (not shown) to allow the discharge of the liquid from the outlet passage (and from spout 12). In particular, connection portion 31 bears and/or comprises the inlet hole and outlet portion 32 bears and/or comprises the outlet hole.

Preferably but not necessarily, the inlet hole is arranged in housing seat 19 and is adjacent to outlet opening 27.

According to a preferred non-limiting embodiment, dispensing device 1 comprises at least one third seal 33 joined to connection portion 31 and housing seat 19 to seal the connection between the connection portion 31 and housing seat 19. This is to ensure that the liquid flows from outlet conduit 7, in use, into the outlet passage (and to prevent uncontrolled discharges of the liquid from main body 4).

With particular reference to Figure 2 and 3, one inlet tube 10, and in particular also inlet tube 11, comprises, or comprise, a respective joint portion 34 inserted respectively into receiving seat 20 and, in particular, into receiving seat 21.

Preferably but not necessarily, dispensing device 1 also comprises sealing means configured to seal the connection between inlet tube 10 and receiving seat 20 and between another inlet tube 11 and another receiving seat 21.

With particular reference to Figures 1, 2 and 3, at least coupling portion 18, connection portion 31, and joint portion 34 are housed within decorative sleeve 13.

Preferably but not necessarily, decorative sleeve 13 extends along a longitudinal axis B.

In particular, decorative sleeve 13 has a tubular configuration.

According to the non-limiting embodiment shown, the outer cross-section of decorative sleeve 13 is circular. Alternatively, the outer cross-section of the decorative sleeve 13 can be square, elliptical, rectangular, or any other shape.

According to the non-limiting embodiment shown, decorative sleeve 13 has a cylindrical shape. Alternatively, decorative sleeve 13 may have different shapes other than the cylindrical shape and/or more complex shapes.

According to a preferred non-limiting embodiment, main body 4 is removably coupled to decorative sleeve 13.

According to a preferred non-limiting embodiment, decorative sleeve 13 comprises at least:
- a first opening 35, which has a first central axis C and through which main body 4, in particular coupling portion 18, enters decorative sleeve 13; and/or
- a second opening 36, which has a second central axis E and through which spout 12 enters, in particular connection portion 13, in decorative sleeve 13; and/or
- a third opening 37, which has a third central axis F and through which inlet tube 10 (in particular, also inlet tube 11) enters, in particular the respective joint portion 34, in decorative sleeve 13.

Preferably but not necessarily, central axis E and/or central axis F is/are transverse, in particular perpendicular, to central axis C.

According to a preferred non-limiting embodiment, central axes E and F are parallel, in particular coaxial, to each other.

Preferably but not necessarily, decorative sleeve 13 is configured to at least partially define the desired aesthetics (e.g. colour, exterior texture, or shape, etc.) of dispensing device 1.

It should be noted that decorative sleeve 13 can be made of a plurality of different materials, for example, metal (brass, gold, silver, bronze, titanium, or stainless steel), plastic material, wood, glass, composite material, and many others, and with or without further finishing.

It is possible to choose from a large number of materials considering that all the fluidic connections to be made are made by means of coupling to main body 4. This also makes it possible to use materials that nowadays cannot be used in the sector.

The support structure 14 comprises a support sleeve 38 at least partially inserted into decorative sleeve 13.

Preferably but not necessarily, support sleeve 38 is oriented parallel and/or coaxial to decorative sleeve 13.

According to the example shown, support sleeve 38 is completely covered by decorative sleeve 13.

Preferably but not necessarily, support sleeve 38 is coupled and/or connected and/or fixed to decorative sleeve 13.

According to an alternative embodiment, support structure 14, in particular support sleeve 38, is integral with decorative sleeve 13.

It should be noted that decorative sleeve 13 and support sleeve 38 can be made of a single piece. In other words, in this case, decorative sleeve 13 also acts as a support structure. However, it is advantageous to make decorative sleeve 13 and support structure 14, in particular the support sleeve 38, separately from each other. The latter solution is particularly advantageous when the external finish, i.e. decorative sleeve 13, has to be made of a precious and expensive material such as gold or silver.

According to a preferred non-limiting embodiment, support sleeve 38 is removably connected to decorative sleeve 13.

According to a preferred non-limiting embodiment, support sleeve 38 comprises one or more openings, one of which is, or both of which are, aligned with first opening 35, second opening 36, or third opening 37, respectively.

According to a preferred non-limiting embodiment, main body 4 comprises a positioning element 39, in particular protruding from coupling portion 18, and inserted into a seat 40 of support structure 14 comprising a support sleeve 38.

According to a preferred embodiment, decorative sleeve 13 and/or support structure 14, in particular support sleeve 38, is/are configured to be coupled on worktop 2.

Preferably but not necessarily, dispensing device 1 also comprises a coupling assembly 41 (having a base ring) configured to be mounted on worktop 2 and (directly) bearing decorative sleeve 13 and/or support structure 14.

With particular reference to Figures 1 to 3, main body 4 also comprises an external portion 42 of main body 4 extending outside decorative sleeve 13 (i.e. the external portion 43 is not housed in decorative sleeve 13). In particular, external portion 42 is connected to coupling portion 18. More specifically, external portion 42 comprises housing seat 9.

Preferably but not necessarily, dispensing device 1 also comprises a decorative shell 43, which is in contact with decorative sleeve 13 and covers and/or surrounds at least external portion 42 and/or third opening 37.

Preferably but not necessarily, decorative shell 43 is made of the same material as decorative sleeve 13.

Alternatively, decorative shell 43 could be of a different material than that of decorative sleeve 13.

With particular reference to Figures 1 to 3, dispensing device 1 also comprises a decorative element, in particular a decorative ring 44, covering and/or configured to cover second opening 36 and to allow the crossing of spout 12.

Preferably but not necessarily, decorative ring 44 is made of the same material as decorative sleeve 13.

Alternatively, decorative ring 44 could be of a different material than that of decorative sleeve 13.

A method for assembling dispensing device 1 comprises at least the following steps:
- insert at least coupling portion 18 into decorative sleeve 13;
- insert mixing cartridge 8 into housing seat 9;
- fix inlet tube 10 to main body 4 and in fluidic connection with the first inlet conduit so that at least the respective joint portion 34 is arranged within decorative sleeve 13;
- mechanically connect at least connection portion 31 to coupling portion 18 so that the outlet passage of spout 12 is or is controllable in fluidic connection with outlet conduit 7 and at least connection portion 31 is arranged within decorative sleeve 13.

Preferably but not necessarily, the assembly method also comprises a step for fixing inlet tube 11 to main body 4 and in fluidic connection to the second inlet conduit so that at least the respective joint portion 34 is arranged within decorative sleeve 13.

Preferably but not necessarily, the assembly method also comprises a step for covering and/or surrounding, at least partially, support structure 14, in particular support sleeve 38.

Preferably but not necessarily, the assembly method also comprises a step for coupling decorative shell 43 to decorative sleeve 13, during which external portion 42 is covered; and/or a step for coupling decorative ring 44 to decorative sleeve 13 to cover second opening 36; and/or a step for coupling knob 15 to mixing cartridge 8; and/or a step for connecting coupling assembly 41 to decorative sleeve 13 and/or support structure 14, in particular to support sleeve 38.

According to a preferred non-limiting embodiment, the step of inserting coupling portion 18 is performed before:
- the step for fixing inlet tube 10; and/or
- the connecting phase; and/or
- the step for fixing inlet tube 11.

According to a preferred non-limiting embodiment, when inserting coupling portion 18, coupling portion 18 is inserted into decorative sleeve 13 through first opening 35.

According to a preferred non-limiting embodiment, during the step for inserting coupling portion 18, main body 4 is removably coupled to decorative sleeve 13.

According to a preferred non-limiting embodiment, during the step of inserting coupling portion 18, coupling portion 18 is also coupled to support structure 14. In particular, coupling portion 18 is inserted into support sleeve 38 and, more specifically, positioning element 39 is inserted into seat 40.

According to a preferred non-limiting embodiment, the covering and/or encircling step is performed before the step of inserting coupling portion 18.

Preferably but not necessarily, during the covering and/or surrounding step, support sleeve 38 is inserted into decorative sleeve 13.

Preferably but not necessarily, during the step of mechanically connecting at least one joint portion 31, joint portion 31 is inserted into housing seat 19. In particular, third seal 33 is also coupled to connection portion 31 and to housing seat 19.

Preferably but not necessarily, during the step of fixing inlet tube 10, the respective joint portion 34 is inserted and fixed into receiving seat 20.

Preferably but not necessarily, during the step of fixing inlet tube 11, the respective joint portion 34 is inserted and fixed into receiving seat 21.

In particular, the respective joint portions 34 are inserted into decorative sleeve 13 through third opening 37.

Preferably but not necessarily, during the step of coupling decorative shell 43 to decorative sleeve 13, decorative shell 43 is coupled so that the first opening 35 is also covered.

The advantages that can be achieved with dispensing device 1 produced according to the present invention are apparent from an examination of the features thereof.

In particular, one advantage lies in the provision of decorative sleeve 13. In this way, it is possible to obtain different models of a dispensing device 1 by preparing different types of decorative sleeves 13 while main body 4 remains one and the same. It should be noted that the production of a main body 4 is more demanding and expensive than the production of a decorative sleeve 13. As a result, a large number of models can be prepared with low production and storage costs.

A further advantage lies in the fact that decorative sleeve 13 can be made of various materials that cannot, at present, be used in the production of known dispensing devices for technical or economic reasons. For example, decorative sleeve 13 can be made of a precious metal, with moderate costs, or it can be made of wood.

An advantage also lies in the fact that decorative sleeve 13 can easily be made according to a variety of aesthetic aspects (e.g. in different shapes, with different external structures, or in different colours, etc.).

Another advantage lies in the fact that it is possible to customize dispensing devices 1 with very fast response times from order to delivery, since only decorative sleeve 13 needs to be adapted.

A further advantage lies in the fact that the cost for the production, storage, and disposal of unused decorative sleeves 13 is lower than the cost for the production, storage, and disposal of a known dispensing device.

Another advantage lies in the fact that repairs to dispensing device 1 are made easier.

A further advantage lies in the fact that the consumer is able to change the aesthetics of dispensing device 1, for example after a few years or months of use, by simply replacing decorative sleeve 13 with a new decorative sleeve 13, and at a reduced cost.

Lastly, it is clear that modifications and variations may be made to dispensing device 1 described and illustrated herein, without departing from the scope of the present invention as set forth in the appended claims.

According to an alternative embodiment not shown, dispensing device 1 may also comprise more than one mixing cartridge.

According to an alternative embodiment not shown, dispensing device 1 could be configured to dispense more than one liquid, e.g. treated water as well.

## Claims

1. A dispensing device (1) for a liquid comprising at least:
- one main body (4) having at least one inlet conduit for receiving at least one portion of the liquid and at least one outlet conduit (7) to allow the discharge of the liquid;
- a control body (8) inserted in a housing seat (9) of the main body (4) and being at least configured to selectively control a fluidic connection between the inlet conduit and the outlet conduit (7);
- an inlet tube (10; 11) fixed to the main body (4) and fluidically connected to the inlet conduit and configured to be connected to a feeding system for providing at least said portion of the liquid;
- a spout (12) having at least one outlet passage being controllable or being in fluidic connection with the outlet conduit (7); and
- a decorative sleeve (13);
wherein at least one connection portion (31) of the spout (12) is mechanically connected to a coupling portion (18) of the main body (4);
wherein at least the coupling portion (18) of the main body (4) is arranged within the decorative sleeve (13);
wherein at least one portion (34) of the inlet tube (10; 11) is arranged within the decorative sleeve (13); and
wherein at least the connection portion (31) of the spout (12) is arranged within the decorative sleeve (13); the dispensing device (1) further comprising a support structure (14) comprising a support sleeve (38) and at least partially surrounded and/or covered by the decorative sleeve (13) and being configured to support the main body (4).

2. The dispensing device according to claim 1, wherein the main body (4) is removably coupled to the decorative sleeve (13).

3. The dispensing device according to claim 1 or 2, wherein the support sleeve (38) being at least partially inserted in the decorative sleeve (13) or being integral with the decorative sleeve (13) .

4. The dispensing device according to any one of the preceding claims, wherein the decorative sleeve (13) comprises a first opening (35), which presents a first central axis (C) and through which the main body (4) enters the decorative sleeve (13);
wherein the decorative sleeve (13) further comprises:
- a second opening (36), which presents a second central axis (E) transversal to the first central axis (C) and through which the spout (12) enters the decorative sleeve (13); and/or
- a third opening (37), which presents a third central axis (F) transversal to the first central axis (C) and through which the inlet tube (10; 11) enters the decorative sleeve (13).

5. The dispensing device according to any one of the preceding claims, further comprising a decorative shell (43) being in contact with the decorative sleeve (13) and covering and/or surrounding at least one external portion (42) of the main body (4) extending outside the decorative sleeve (13).

6. A method for assembling a dispensing device (1) for a liquid comprising at least the following steps:
- insert at least one coupling portion (18) of a main body (4) into a decorative sleeve (13), the main body (4) having at least one inlet conduit for receiving at least a portion of the liquid and at least one outlet conduit (7) to allow the discharge of the liquid;
- insert a control body (8) into a housing seat (19) of the main body (4) so that the control body (8) is configured to selectively control at least one fluidic connection between the inlet conduit and the outlet conduit (7);
- fix an inlet tube (10; 11) to the main body (4) and in fluidic connection with the inlet conduit so that at least one portion (34) of the inlet tube (10; 11) is arranged within the decorative sleeve (13); wherein the inlet tube (10; 11) is configured to be connected to a feeding system for the delivery of at least a portion of the liquid;
- mechanically connecting at least one connection portion (31) of a spout (12) to the coupling portion (18) of the main body (4) so that an outlet passage of the spout (12) is in fluidic connection, or is controllable to be in in fluidic connection, with the outlet conduit (7) and so that at least the connection portion (31) is arranged within the decorative sleeve (13);
the method further comprising the step of covering and/or surrounding at least a portion of a support structure (14) by means of the decorative sleeve (13);
wherein the support structure (14) comprises a support sleeve (38) and configured to support the main body (4); and
wherein during the step of inserting the coupling portion (18) of the main body (4), the main body (4) is coupled to and/or at least partially inserted into the support structure (14).

7. The method according to claim 6, wherein the step of inserting the coupling portion (18) of the main body (4) is executed before the step of fixing and the step of mechanically connecting.

8. The method according to claim 6 or 7, wherein during the step of covering and/or surrounding, the support sleeve (38) is inserted into the decorative sleeve (13).

9. The method according to any one of claims 6 to 8, further comprising the step of coupling a decorative shell (43) to an external portion (42) of the main body (4) so that the decorative shell (43) covers and/or surrounds, at least partially, the external portion (42) of the main body (4) and so that the decorative shell (43) is in contact with the decorative sleeve (13).

## Patentansprüche

1. Abgabevorrichtung (1) für eine Flüssigkeit umfassend mindestens:
- einen Grundkörper (4) mit mindestens einer Einlassleitung zur Aufnahme mindestens eines Teils der Flüssigkeit und mindestens einer Auslassleitung (7), um den Abfluss der Flüssigkeit zu ermöglichen;
- einen Steuerkörper (8), der in einen Gehäusesitz (9) des Grundkörpers (4) eingesetzt ist und zumindest so konfiguriert ist, dass er selektiv eine Fluidverbindung zwischen der Einlassleitung und der Auslassleitung (7) steuert;
- ein Einlassrohr (10; 11), welches am Grundkörper (4) befestigt und fluidtechnisch mit der Einlassleitung verbunden ist und so ausgelegt ist, dass es mit einem Zuführsystem verbunden ist, um zumindest den Teil der Flüssigkeit bereitzustellen;
- eine Ausgussröhre (12) mit mindestens einem Auslasskanal, welche steuerbar ist oder in Fluidverbindung mit der Auslassleitung (7) steht; und
- eine Dekorhülse (13);
wobei mindestens ein Verbindungsabschnitt (31) der Ausgussröhre (12) mechanisch mit einem Kupplungsabschnitt (18) des Grundkörpers (4) verbunden ist;
wobei zumindest der Kupplungsabschnitt (18) des Grundkörpers (4) innerhalb der Dekorhülse (13) angeordnet ist;
wobei mindestens ein Abschnitt (34) des Einlassrohrs (10; 11) innerhalb der Dekorhülse (13) angeordnet ist; und
wobei zumindest der Anschlussabschnitt (31) der Ausgussröhre (12) innerhalb der Dekorhülse (13) angeordnet ist;
wobei die Abgabevorrichtung (1) ferner eine Trägerstruktur (14), welche eine Trägerhülse (38) umfasst und zumindest teilweise von der Dekorhülse (13) umgeben und/oder bedeckt ist und so konfiguriert ist, dass sie den Grundkörper (4) trägt, umfasst.

2. Abgabevorrichtung nach Anspruch 1, wobei der Grundkörper (4) lösbar mit der Dekorhülse (13) gekoppelt ist.

3. Abgabevorrichtung nach Anspruch 1 oder 2, wobei die Trägerhülse (38) zumindest teilweise in die Dekorhülse (13) eingesetzt oder mit der Dekorhülse (13) einstückig ausgebildet ist.

4. Abgabevorrichtung nach einem der vorhergehenden Ansprüche, wobei die Dekorhülse (13) eine erste Öffnung (35), welche eine erste Mittelachse (C) aufweist und durch die der Grundkörper (4) in die Dekorhülse (13) eintritt, aufweist;
wobei die Dekorhülse (13) weiterhin umfasst:
- eine zweite Öffnung (36), welche eine zweite Mittelachse (E) quer zur ersten Mittelachse (C) aufweist, und durch welche die Ausgussröhre (12) in die Dekorhülse (13) eintritt; und/oder
- eine dritte Öffnung (37), welche eine dritte Mittelachse (F) quer zur ersten Mittelachse (C) aufweist und durch welche das Einlassrohr (10; 11) in die Dekorhülse (13) eintritt.

5. Abgabevorrichtung nach einem der vorhergehenden Ansprüche, welche ferner eine Dekorschale (43) umfasst, welche mit der Dekorhülse (13) in Kontakt steht und mindestens einen äußeren Abschnitt (42) des Grundkörpers (4), welcher sich außerhalb der Dekorhülse (13) erstreckt, abdeckt und/oder umgibt.

6. Verfahren zur Montage einer Abgabevorrichtung (1) für eine Flüssigkeit, welches mindestens die folgenden Schritte umfasst:
- Einführen mindestens eines Kupplungsabschnitts (18) eines Grundkörpers (4) in eine Dekorhülse (13), wobei der Grundkörper (4) mindestens eine Einlassleitung zur Aufnahme mindestens eines Teils der Flüssigkeit und mindestens eine Auslassleitung (7) aufweist, um den Abfluss der Flüssigkeit zu ermöglichen;
- Einsetzen eines Steuerkörpers (8) in einen Gehäusesitz (19) des Grundkörpers (4), so dass der Steuerkörper (8) so konfiguriert ist, dass er selektiv mindestens eine fluidtechnische Verbindung zwischen der Einlassleitung und der Auslassleitung (7) steuert;
- Befestigen eines Einlassrohrs (10; 11) an dem Grundkörper (4) und in Fluidverbindung mit der Einlassleitung, so dass mindestens ein Abschnitt (34) des Einlassrohrs (10; 11) innerhalb der Dekorhülse (13) angeordnet ist; wobei das Einlassrohr (10; 11) so konfiguriert ist, dass es mit einem Zuführsystem für die Abgabe mindestens eines Teils der Flüssigkeit verbunden ist;
- mechanisches Verbinden mindestens eines Anschlussabschnitts (31) einer Ausgussröhre (12) mit dem Kupplungsabschnitt (18) des Grundkörpers (4), so dass ein Auslasskanal der Ausgussröhre (12) in Fluidverbindung mit der Auslassleitung (7) steht oder steuerbar ist, um mit dieser in Fluidverbindung zu stehen, und so dass mindestens der Anschlussabschnitt (31) innerhalb der Dekorhülse (13) angeordnet ist;
wobei das Verfahren ferner den Schritt des Abdeckens und/oder Umschließens mindestens eines Teils einer Trägerstruktur (14) mittels der Dekorhülse (13) umfasst;
wobei die Trägerstruktur (14) eine Trägerhülse (38) umfasst und so konfiguriert ist, dass sie den Grundkörper (4) trägt; und
wobei während des Schritts des Einsetzens des Kupplungsabschnitts (18) des Grundkörpers (4) der Grundkörper (4) mit der Trägerstruktur (14) gekoppelt und/oder zumindest teilweise in diese eingesetzt wird.

7. Verfahren nach Anspruch 6, wobei der Schritt des Einsetzens des Kupplungsabschnitts (18) des Grundkörpers (4) vor dem Schritt des Fixierens und dem Schritt des mechanischen Verbindens ausgeführt wird.

8. Verfahren nach Anspruch 6 oder 7, wobei während des Schritts des Abdeckens und/oder Umschließens die Trägerhülse (38) in die Dekorhülse (13) eingesetzt wird.

9. Verfahren nach einem der Ansprüche 6 bis 8, welches ferner den Schritt des Koppelns einer Dekorschale (43) mit einem äußeren Abschnitt (42) des Grundkörpers (4) umfasst, so dass die Dekorschale (43) den äußeren Abschnitt (42) des Grundkörpers (4) zumindest teilweise bedeckt und/oder umgibt, und so dass die Dekorschale (43) in Kontakt mit der Dekorhülse (13) steht.

## Revendications

1. Dispositif de distribution (1) pour un liquide comprenant au moins :
- un corps principal (4) ayant au moins un conduit d'entrée pour recevoir au moins une partie du liquide et au moins un conduit de sortie (7) pour permettre la décharge du liquide ;
- un corps de commande (8) inséré dans un siège de boîtier (9) du corps principal (4) et étant au moins configuré pour commander sélectivement un raccordement fluidique entre le conduit d'entrée et le conduit de sortie (7) ;
- un tube d'entrée (10 ; 11) fixé au corps principal (4) et raccordé, de manière fluidique, au conduit d'entrée et configuré pour être raccordé à un système d'alimentation pour fournir au moins ladite partie du liquide ;
- un bec verseur (12) ayant au moins un passage de sortie qui peut être commandé ou être en raccordement fluidique avec le conduit de sortie (7) ; et
- un manchon décoratif (13) ;
dans lequel au moins une partie de raccordement (31) du bec verseur (12) est mécaniquement raccordée à une partie de couplage (18) du corps principal (4) ;
dans lequel au moins la partie de couplage (18) du corps principal (4) est agencée dans le manchon décoratif (13) ;
dans lequel au moins une partie (34) du tube d'entrée (10 ; 11) est agencée dans le manchon décoratif (13) ; et
dans lequel au moins la partie de raccordement (31) du bec verseur (12) est agencée dans le manchon décoratif (13) ;
le dispositif de distribution (1) comprenant en outre une structure de support (14) comprenant un manchon de support (38) et au moins partiellement entouré et/ou recouvert par le manchon décoratif (13) et étant configuré pour supporter le corps principal (4).

2. Dispositif de distribution selon la revendication 1, dans lequel le corps principal (4) est couplé, de manière amovible, au manchon décoratif (13).

3. Dispositif de distribution selon la revendication 1 ou 2, dans lequel le manchon de support (38) est au moins partiellement inséré dans le manchon décoratif (13) ou est solidaire du manchon décoratif (13).

4. Dispositif de distribution selon l'une quelconque des revendications précédentes, dans lequel le manchon décoratif (13) comprend une première ouverture (35) qui présente un premier axe central (C) et à travers laquelle le corps principal (4) pénètre dans le manchon décoratif (13) ;
dans lequel le manchon décoratif (13) comprend en outre :
- une deuxième ouverture (36) qui présente un deuxième axe central (E) transversal par rapport au premier axe central (C) et à travers laquelle le bec verseur (12) pénètre dans le manchon décoratif (13) ; et/ou
- une troisième ouverture (37) qui présente un troisième axe central (F) transversal par rapport au premier axe central (C) et à travers laquelle le tube d'entrée (10 ; 11) pénètre dans le manchon décoratif (13).

5. Dispositif de distribution selon l'une quelconque des revendications précédentes, comprenant en outre une coque décorative (43) qui est en contact avec le manchon décoratif (13) et recouvrant et/ou entourant au moins une partie externe (42) du corps principal (4) s'étendant à l'extérieur du manchon décoratif (13).

6. Procédé pour assembler un dispositif de distribution (1) pour un liquide comprenant au moins les étapes suivantes :
- insérer au moins une partie de couplage (18) d'un corps principal (4) dans un manchon décoratif (13), le corps principal (4) ayant au moins un conduit d'entrée pour recevoir au moins une partie du liquide et au moins un conduit de sortie (7) pour permettre la décharge du liquide ;
- insérer un corps de commande (8) dans un siège de boîtier (19) du corps principal (4) de sorte que le corps de commande (8) est configuré pour commander sélectivement au moins un raccordement fluidique entre le conduit d'entrée et le conduit de sortie (7) ;
- fixer un tube d'entrée (10 ; 11) au corps principal (4) et en raccordement fluidique avec le conduit d'entrée de sorte qu'au moins une partie (34) du tube d'entrée (10 ; 11) est agencée dans le manchon décoratif (13) ; dans lequel le tube d'entrée (10 ; 11) est configuré pour être raccordé à un système d'alimentation pour la distribution d'au moins une partie du liquide ;
- raccorder mécaniquement au moins une partie de raccordement (31) d'un bec verseur (12) à la partie de couplage (18) du corps principal (4) de sorte qu'un passage de sortie du bec verseur (12) est en raccordement fluidique, ou peut être commandé pour être en raccordement fluidique avec le conduit de sortie (7) et de sorte qu'au moins la partie de raccordement (31) est agencée dans le manchon décoratif (13) ;
le procédé comprenant en outre l'étape pour recouvrir et/ou entourer au moins une partie d'une structure de support (14) au moyen du manchon décoratif (13) ;
dans lequel la structure de support (14) comprend un manchon de support (38) et configurée pour supporter le corps principal (4) ; et
dans lequel pendant l'étape pour insérer la partie de couplage (18) du corps principal (4), le corps principal (4) est couplé à et/ou au moins partiellement inséré dans la structure de support (14).

7. Procédé selon la revendication 6, dans lequel l'étape pour insérer la partie de couplage (18) du corps principal (4) est exécutée avant l'étape de fixation et l'étape de raccordement mécanique.

8. Procédé selon la revendication 6 ou 7, dans lequel :
pendant l'étape pour recouvrir et/ou entourer, le manchon de support (38) est inséré dans le manchon décoratif (13).

9. Procédé selon l'une quelconque des revendications 6 à 8, comprenant en outre l'étape pour coupler une coque décorative (43) à une partie externe (42) du corps principal (4) de sorte que la coque décorative (43) recouvre et/ou entoure, au moins partiellement, la partie externe (42) du corps principal (4) et de sorte que la coque décorative (43) est en contact avec le manchon décoratif (13).
